# EUROPEAN PATENT SPECIFICATION

(11) **EP 1 044 767 B1**
(45) Date of publication and mention of the grant of the patent: **26.09.2007**
(21) Application number: 00108185.0
(22) Date of filing: 13.04.2000
(51) Int. Cl.: B24B 53/00, B24B 7/02

(54) **Electrolytic in-process dressing apparatus**
Elektrolytische in Prozess Abrichtvorrichtung
Dispositif de dressage electrolytique en cours de fabrication

(30) Priority: 14.04.1999 JP 10692099
(43) Date of publication of application: 18.10.2000
(73) Proprietor: RIKEN, Wako-shi, Saitama 351-0198 (JP)
(72) Inventor: Ohmori, Hitoshi, Wako-shi, Saitama 351-0198 (JP)
(74) Representative: Grünecker, Kinkeldey, Stockmair & Schwanhäusser Anwaltssozietät

(56) References cited:
- EP-A- 0 640 438
- JP-A- 10 249 689
- US-A- 5 236 784
- US-A- 5 639 363

## Description

### BACKGROUND OF THE INVENTION

### TECHNICAL FIELD OF THE INVENTION

The present invention relates to a table-top ELID processing apparatus, according to the preamble portion of claim 1. for efficiently and accurately grinding a small workpiece and processing it to a mirror surface.

### PRIOR ART

An apparatus of the above type is known from US-A-5 639 363. Table-top lathes, table-top milling machines, etc. are widely being used in homes and laboratories for machining small workpieces. These table-top machining apparatuses process easily machinable materials such as copper, aluminum, wood, and plastics. However, for tough materials, e.g., fine ceramics, optical glasses, semiconductor single crystals, and other hard brittle materials and cemented carbides, a general-purposed large machine must conventionally be used, even if the workpiece is small. Therefore, it has been demanded to develop a table-top machining apparatus that can be used like a table-top lathe etc. and can process even a hard brittle material and cemented carbide with high accuracy and efficiency.

However, there were the following problems in developing the aforementioned table-top machining apparatus.
(1) A hard brittle material and cemented carbide may most appropriately be machined by grinding using a grindstone. But, the resistance of a material to grinding is greater than to normal cutting, and the resistance of the linear guide that guides a workpiece is also normally larger. Consequently, the motor etc. required for machining becomes larger and more powerful to drive the equipment. Normally, the above-mentioned processing machine is driven by a three-phase power supply higher than 200V AC. As a result, even if the equipment is made smaller for household or laboratory use, it is difficult to modify the equipment to a compact, low-power system that can be driven by a low voltage (single-phase 100V) and can be used on a table-top.
(2) A grindstone used for grinding normally becomes loaded with cut chips and debris within a short time, so it cannot be operated at a high efficiency. Although the inventors of the present invention, et al. are developing an electrolytic in-process dressing grinding (refer to ELID grinding), a predetermined pulse power supply is indispensable to utilize the grinding system. However, this pulse power supply must provide a rather high voltage (for instance, 60V to 150V) even for a small workpiece, together with a pulse current of about 1A to 3A, therefore, the power supply becomes large. In addition, an ELID grinding system should unavoidably use a conductive processing fluid whose viscosity may often increase processing resistance, so power consumption becomes still greater. In addition, if this processing fluid enter into the linear guide, the life of the guide becomes shorter and its sliding resistance fluctuates. If a seal etc. is installed to prevent the fluid from ingress, processing resistance increases, and the life of the seal is reduced by the processing fluid.

### SUMMARY OF THE INVENTION

The present invention has been accomplished to solve these problems. That is, an object of the present invention is to provide a table-top ELID processing apparatus that can process even a hard brittle material and cemented carbide, whereby both driving and pulse power supplies can be compact, and the equipment can be operated at a low voltage (single-phase 100V) and can be so small that it can be used on the top of a table.

According to the present invention, the table-top ELID processing apparatus, according to claim 1, is provided to achieve the above object. The apparatus is provided with a conductive grindstone (2) for processing a workpiece (1), an electrode (4) that can be installed with a predetermined spacing from a working surface of the aforementioned conductive grindstone, a processing fluid supplying device (6) for supplying a conductive processing fluid between the grindstone and the electrode, and a power supply (8) for applying power between the grindstone and the electrode, wherein the aforementioned power supply (8) is comprised with a DC power supply and an RC circuit that generates pulse-like voltage, and can supply power for both electrolytic dressing and discharge truing. In addition, the apparatus is also provided with a work driving device (12) that drives a table with the workpiece in the horizontal orthogonal directions X and Y, a tool-driving device (14) for driving the conductive grindstone vertically of the workpiece while rotating the conductive grindstone around vertical shaft Z, and a numeric control device (16) which numerically controls the work driving device and the tool-driving device.

With the above-mentioned configuration of the present invention, because the power supply (8) is comprised with a DC power supply and an RC circuit which generate pulse-like voltages and can supply power for both electrolytic dressing and discharge truing, the power supply can be used for both ELID processing and discharge truing, whenever required. In addition, because of the simplicity of the circuit, the power supply can be made considerably smaller than a conventional pulse power supply, which generates an identical current pulse. Furthermore, a simple numeric control system can be achieved and a workpiece can be processed to a high accuracy by installing work driving device (12) and tool-driving device (14), and controlling these devices using a numeric control device (16) (for instance, a personal computer).

Hence, an electrolytic in-process dressing grinding (ELID grinding) method can be configured using a small, simple power supply (8), whereby the grindstone is dressed to greatly reduce cutting resistance, the necessary power can be decreased, and a hard brittle material and cemented carbide can be processed at a high efficiency and a high accuracy.

According to a preferred embodiment of the present invention, the aforementioned work driving device (12) is guided by a hard porous carbon material whose dynamic friction coefficient and static friction coefficient are substantially the same no matter whether it is unlubricated or it is in water. Using the above-mentioned hard porous carbon material (for example, RB ceramics) as a guide at a sliding portion, even if processing fluid enters the linear guide, the coefficient of friction does not alter. Therefore, positioning accuracy which is numerically controlled, can be maintained high. Because the coefficient of friction does not vary and the carbon material is not attacked by the processing fluid, no seal is required, and the sliding resistance can be kept at a low value.

Other objects and advantages of the present invention are revealed by the following paragraphs referring to the attached drawings.

### BRIEF DESCRIPTION OF THE DRAWINGS

Fig. 1 is a general perspective view of a table-top ELID processing apparatus according to the present invention.
Fig. 2 shows a circuit of the power supply for both electrolytic dressing and discharge truing.
Fig. 3 is a load characteristic diagram of the power supply in Fig. 2.
Figs. 4A to 4C show examples of pulse-like voltages with the power supply in Fig. 2.
Fig. 5 is a structural view of a guide portion of the work driving device.
Fig. 6 shows the relationship between baking temperatures and friction coefficients of a hard porous carbon material.

### DESCRIPTION OF PREFERRED EMBODIMENTS

Embodiments of the present invention are described below referring to the drawings. In each figure, common portions are identically numbered, and no duplicate description is given here.

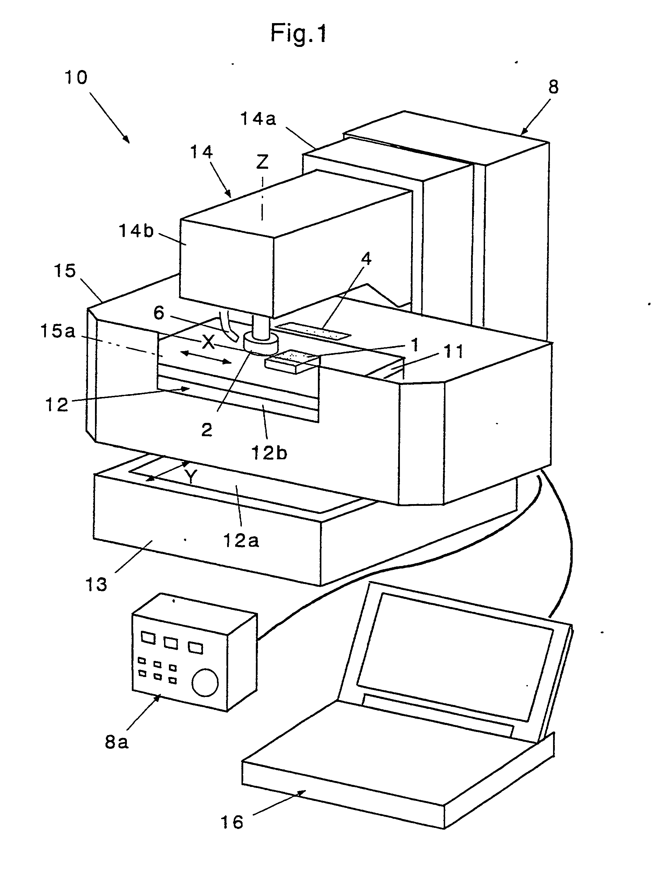

Fig. 1 is a general perspective view of a table-top ELID processing apparatus according to the present invention. In Fig. 1, table-top ELID processing apparatus 10 according to the present invention is provided with a conductive grindstone 2, an electrode 4, a processing fluid supplying device 6, and a power supply 8 which applies a voltage between grindstone 2 and electrode 4. In addition, table-top ELID processing apparatus 10 is also provided with a work driving device 12 which drives a table 11 with a workpiece 1 mounted thereon in horizontally orthogonal directions X and Y, a tool-driving device 14 which drives conductive grindstone 2 in the vertical direction, while rotating the grindstone around vertical shaft Z with respect to workpiece 1, and a numeric control device 16 which numerically controls work driving device 12 and tool-driving device 14.

In this embodiment, workpiece 1 is fixed directly on top of table 11, whose upper surface is to be processed. However, the present invention is not limited only to this configuration. For example, another table for fixing workpiece 1 on table 11 is installed, and workpiece 1 can be rotated around an axis (X, Y, Z, etc.) using this table.

Conductive grindstone 2 is a cylindrical or cup grindstone which rotates around the vertical Z shaft and whose lower surface processes workpiece 1. Conductive grindstone 2 may also preferably be a metal bond grindstone using fine diamond grains. However, conductive grindstone 2 is not limited only to these examples. Instead, various types suitable for ELID processing can also be used freely.

Electrode 4 can be installed with a predetermined spacing from a surface of the workpiece of conductive grindstone 2. This electrode 4 is preferably electrolytically dressed during ELID processing, as installed away from the working surface of conductive grindstone 2. The working surface of conductive grindstone 2 can also be electrolytically dressed or discharge trued by installing the electrode on a table separate from the workpiece.

Processing fluid supplying device 6 supplies a conductive processing fluid between grindstone 2 and electrode 4. In Fig. 1, numeral 13 represents a tank of processing fluid in which processing fluid is stored and fed between the working surface of grindstone 2 and electrode 4 using a pump (not illustrated). The processing fluid should preferably be an electrolyte suitable for ELID processing. The electric conductivity of the fluid may also be adjusted according to discharge truing intended. Moreover, a surfactant etc. may preferably be added to reduce surface tension while reducing processing resistance due to the processing fluid.

Work driving device 12, in this embodiment, is comprised with a Y-axis table 12a installed on top of the processing fluid tank 13 and an X-axis table 12b installed thereon. Aforementioned table 11 is fixed on the upper surface of the X-axis table 12b. The Y-axis table 12a and the X-axis table 12b are provided with respective linear guides, driving motors, and position detecting scales, and can be precisely positioned by numeric control.

Numeral 15 in Fig. 1 denotes a cover installed to enclose the Y-axis table 12b to prevent the processing fluid from spraying out during processing, although only the upper front portion 15a is open. Open portion 15a can be closed with a transparent cover so that one can access the equipment and observe processing conditions.

The tool driving device 14 is configured with a column 14a and a spindle unit 14b provided thereon. Spindle unit 14a houses a spindle, which holds and rotates grindstone 2, a motor to drive the spindle, and a Z-axis table for driving the grindstone 2 in the vertical direction Z. The Z-axis table can also be positioned precisely by a numeric control system, because linear guide, driving motor, and position-detecting scale are equipped in the unit, like Y-axis table 12a and X-axis table 12b.

Numeric control device 16 is a personal computer provided with a parallel and/or serial interface (for instance, RS-232C), and drives Y-axis table 12a, X-axis table 12b and the Z-axis table by NC control: However, in place of the personal computer, a custom chip and a micro-servo controller can also be incorporated to make up a small, simple NC control device.

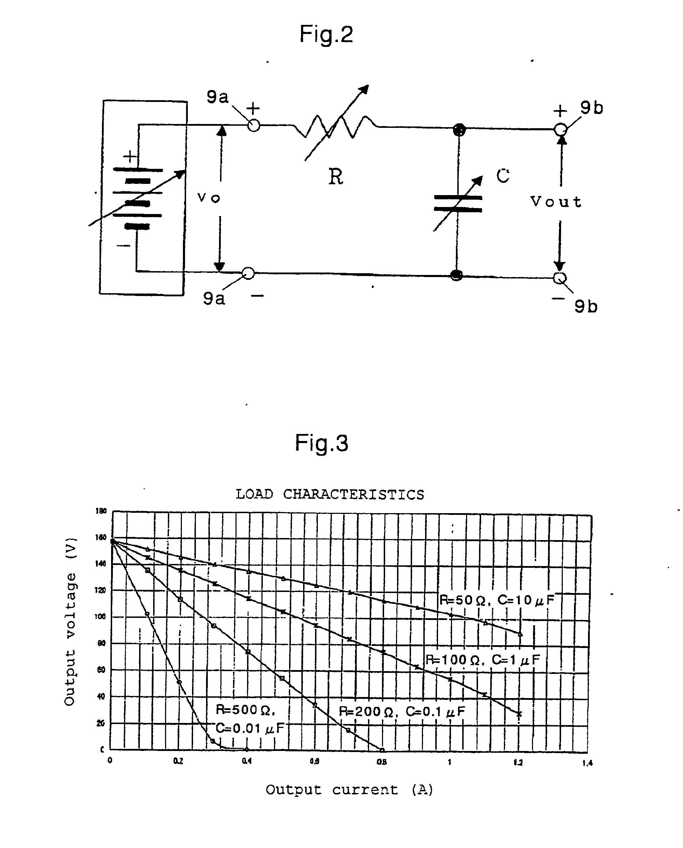

Fig. 2 is a circuit diagram of the power supply for both electrolytic dressing and discharge truing. As shown in Fig. 2, power supply 8 applied to table-top ELID processing apparatus 10 according to the present invention has a DC power supply circuit, not illustrated, and an RC circuit connected thereto, and can generate pulse-like voltages. In detail, as shown in Fig. 2, this circuit is provided with a variable resistance R connected between input and output terminals 9a, 9b at the positive side, and a variable capacitor C connected between positive and negative lines of output terminals 9b.

According to the embodiment of the present invention, the DC power supply circuit provides output voltages at DC 30V to 150V using a low voltage power supply of AC single-phase 100V. In addition, variable resistance R can be varied stepwise or continuous in a range of 50 Ω to 500 Ω, and variable capacitor C can be changed without or with steps in the 0.01 µF to 10 µF range.

Using this configuration, predetermined pulse voltages can be applied between grindstone 2 and electrode 4 by charging capacitor C using a simple circuit when output terminals 9b are open, and discharging capacitor C when the resistance between terminals 9a and 9b decreases.

Fig. 3 is a load characteristic diagram of this power supply. As shown in Fig. 3, any voltage in the range with a maximum voltage of about 150V and a maximum current of 1.2A can be generated by adjusting variable resistance R and variable capacitor C.

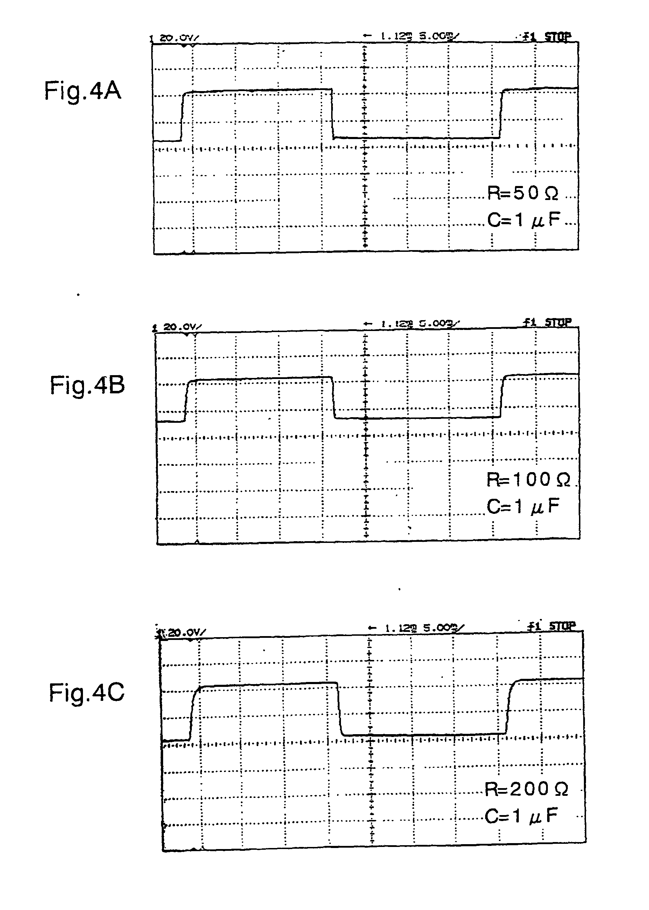

Figs. 4A, 4B, and 4C show examples of pulse-like voltages generated by the power supply in Fig. 2. Figs. 4A, 4B, and 4C relate to R = 50 Ω, R = 100 Ω, and R = 200 Ω, respectively, using capacitor C with 1 µF in all cases. From these figures, one skilled in the state of the art can understand that pulse-like voltages can be generated by adjusting variable resistance R and variable capacitor C, although the voltages are not complete pulses. In addition, in any of the cases of R = 50 Ω, 100 Ω, and 200 Ω, a capacitance of C = 10 *µ*F resulted in a pulse dropping at wave front and rear, however, as the capacitance was made small, pulses approached complete ones, and with C = 0.1 and 0.01 *µ*F, pulses were much better than those in Figs. 4A, 4B, and 4C, according to an experiment carried out. Even when R = 500Ω, a capacitor with C = 0.01*µ*F rendered similar pulse waves to those in Fig. 4A, 4B, and 4C.

Referring to the results of Figs. 3, 4A, 4B, and 4C, it was confirmed that the above-mentioned power supply can be applied to both electrolytic dressing and discharge truing whenever required. In power supply 8, output voltage, variable resistance, variable capacitor, etc. can be freely adjusted by controller 8a shown in Fig. 1.

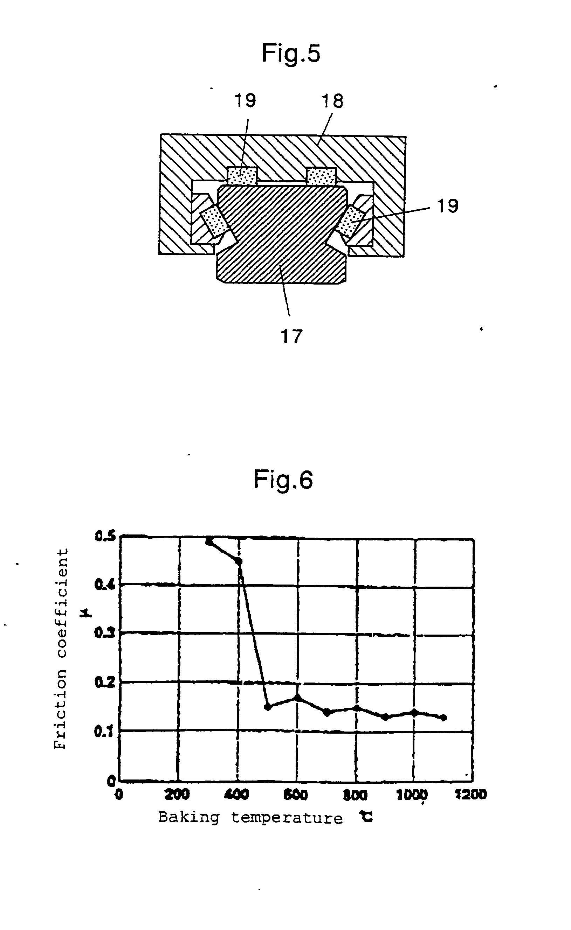

Fig.5 shows the structure of a guide unit of the work driving device. In Fig.5, numeral 17 represents a guide rail at the fixed side, 18 represents a guide block at the driven side, and 19 represents sliding materials located between both sides. These sliding materials 19 should preferably be made of a hard porous carbon material whose dynamic and static friction coefficients without lubricating are substantially the same as those in water. These hard porous carbon materials include RB ceramics manufactured by mixing a phenol resin into degreasing rice bran, forming and processing the mix, and carbonizing it in a nitrogen gas atmosphere.

Fig.6 shows the relationship between baking temperatures and friction coefficients of the aforementioned hard porous carbon material. In Fig.6, a baking temperature of 500°C or more drastically reduces the coefficient of friction to an essentially constant value of 0.13 to 0.17. This hard porous carbon material gives, even in water, a low coefficient of friction that is substantially identical to that in air. In addition, even in a wide pressure range, static and dynamic friction coefficients of the material are approximately the same. Consequently, when such a hard porous carbon material as that described above (for instance, RB ceramics) is used as a guide at the sliding unit, even if processing fluid intrudes to the linear guide, friction coefficients do not fluctuate, therefore, positioning accuracy can be maintained high by numeric control. Because friction coefficients do not vary and the carbon material is not attacked by a processing fluid, no seal is required, so sliding resistance can be kept low.

According to the aforementioned configuration of the present invention, power supply 8 is comprised with the DC power supply and the RC circuit, which generate pulse-like voltages, and can be applied to both electrolytic dressing and discharge truing. Therefore, using this power supply, both ELID processing and discharge truing can be actuated when required. In addition, because the circuit is simple, the size thereof can be made much smaller than conventional pulse power supply circuits, provided the same pulse current is generated. In addition, Work driving device 12 and tool-driving device 14 are installed and controlled by numeric control device 16 (personal computer), so a simple numeric control system can be achieved and high-precision processing is enabled.

As a result, electrolytic in-process dressing grinding (ELID grinding) can be established using a small, simple power supply 8, thus cutting resistance can be greatly reduced by dressing the grindstone, while also decreasing power consumption. Therefore, a hard brittle material and cemented carbide can be processed highly efficiently at a high accuracy.

As described above, the table-top ELID processing apparatus according to the present invention can process a hard brittle material and cemented carbide at a high accuracy, and both power supplies for driving power and pulse generation can be made compact. Therefore, the apparatus can be operated with small power at a low voltage (single-phase 100V), and can be small enough to be put on a desk, which are preferred advantages.

## Claims

1. A table-top ELID processing apparatus (10) comprising a conductive grindstone (2) for processing a workpiece (1), an electrode (4) installed with a predetermined spacing from the working surface of the conductive grindstone (2), a processing fluid supplying device (6) for supplying a conductive processing fluid between the grindstone (2) and the electrode (4), and a power supply (8) for applying a voltage between the grindstone (2) and the electrode (4), wherein
the power supply (8) comprises a DC power supply and an RC circuit, which generate pulse-like voltages, and can be applied to both electrolytic dressing and discharge truing, and the apparatus (10) also comprises a Work driving device (12) for driving a table (12a,12b) with a workpiece (1) mounted thereon in horizontally orthogonal directions X and Y, the apparatus being
**characterised by** further comprising: a tool-driving device (14), which while rotating the conductive grindstone (2) around the vertical shaft Z thereof, drives the grindstone (2) in the vertical direction thereof in relation to the workpiece (1), and a numeric control device (16) for numerically controlling the Work driving device (12) and the tool-driving device (14).

2. The table-top ELID processing apparatus (10) specified in claim 1, wherein the work driving device (12) is guided by a hard porous carbon material whose dynamic coefficients and static coefficients of friction, without lubricating and in water, are substantially the same.

## Patentansprüche

1. Tisch-ELID-Bearbeitungsvorrichtung (10), die einen leitenden Schleifstein (2) zum Bearbeiten eines Werkstücks (1), eine Elektrode (4), die in einem vorgegebenen Abstand zu der Arbeitsfläche des leitenden Schleifsteins (2) installiert ist, eine Bearbeitungsfluid-Zuführeinrichtung (6) zum Zuführen eines leitenden Bearbeitungsfluids zwischen dem Schleifstein (2) und der Elektrode (4) sowie eine Stromversorgung (8) zum Anlegen einer Spannung zwischen dem Schleifstein (2) und der Elektrode (4) umfasst, wobei
die Stromversorgung (8) eine Gleichstromquelle und eine Widerstands-Kapazitätsschaltung umfasst, die impulsartige Spannungen erzeugen, und sowohl bei elektrolytischem Schärfen als auch zum Entladungsabrichten eingesetzt werden kann und die Vorrichtung (10) des Weiteren eine Werkstück-Antriebseinrichtung (12) zum Antreiben des Tischs (12a, 12b) mit einem darauf montierten Werkstück (1) in horizontal orthogonalen Richtungen X und Y umfasst und die Vorrichtung **dadurch gekennzeichnet ist, dass** sie des Weiteren umfasst:
eine Werkzeug-Antriebseinrichtung (14), die, während sie den leitenden Schleifstein (2) um die vertikale Welle Z desselben herumdreht, den Schleifstein (2) in der vertikalen Richtung desselben in Bezug auf das Werkstück (1) ansteuert, und eine numerische Steuervorrichtung (16), die die Werkstück-Antriebseinrichtung (1) und die Werkzeug-Antriebseinrichtung (14) numerisch steuert.

2. Tisch-ELID-Bearbeitungsvorrichtung (10) nach Anspruch 1, wobei die Werkstück-Antriebseinrichtung (12) durch ein hartes poröses Kohlenstoffmaterial geführt wird, dessen Gleitreibungskoeffizient und Haftreibungskoeffizient ohne Schmierung und in Wasser im Wesentlichen die gleichen sind.

## Revendications

1. Appareil de traitement ELID sur table (10) comprenant une meule (2) conductrice pour traiter une pièce à usiner (1), une électrode (4) disposée à un écartement prédéterminé de la surface de travail de la meule (2) conductrice, un dispositif d'alimentation en fluide de traitement (6) pour amener un fluide de traitement conducteur entre la meule (2) et l'électrode (4) et une alimentation en courant (8) pour appliquer une tension entre la meule (2) et l'électrode (4), dans lequel
l'alimentation en courant (8) comprend une alimentation en courant continu et un circuit RC, qui génère des tensions de type pulsé et peut être appliquée à la fois pour le dressage électrolytique et le dressage par décharge et l'appareil (10) comprenant également un pousse-toc (12) pour entraîner une table (12a, 12b) munie d'une pièce à usiner (1) montée dessus dans les directions horizontalement perpendiculaires X et Y, l'appareil étant
**caractérisé en ce qu'**il comprend en outre : un dispositif d'entraînement d'outil (14) qui, tout en tournant la meule (2) conductrice autour de son arbre vertical Z, entraîne la meule (2) dans la direction verticale de celui-ci par rapport à la pièce à usiner (1) et un dispositif de commande numérique (16) pour commander de façon numérique le pousse-toc (12) et le dispositif d'entraînement d'outil (14).

2. Appareil de traitement ELID sur table (10) selon la revendication 1, dans lequel le pousse-toc (12) est guidé par un matériau en carbone poreux dur dont les coefficients dynamiques et les coefficients statiques de frottement, sans lubrification et dans l'eau, sont pour l'essentiel les mêmes.
